# FASCICULE DE BREVET EUROPEEN

(11) **EP 0 767 743 B1**
(45) Date de publication et mention de la délivrance du brevet: **06.05.1999**
(21) Numéro de dépôt: 95942228.8
(22) Date de dépôt: 07.12.1995
(51) Int. Cl.: B60N 3/14

(54) **BOUCHON CHAUFFANT POUR ALLUME-CIGARES, NOTAMMENT DE VEHICULES AUTOMOBILES**
HEIZSTOPFEN FÜR ZIGARETTENANZÜNDER, INSBESONDERE FÜR KRAFTFAHRZEUGE
HEATING PLUG FOR A CIGARETTE LIGHTER, PARTICULARLY IN MOTOR VEHICLES

(30) Priorité: 08.12.1994 FR 9414896
(43) Date de publication de la demande: 16.04.1997
(73) Titulaire: VALEO VISION, 93000 Bobigny (FR)
(72) Inventeur: NEYRET, Bertrand, F-69006Lyon (FR)
(74) Mandataire: Gamonal, Didier
(86) Numéro de dépôt international: FR9501627
(87) Numéro de publication internationale: WO9617747

(56) Documents cités:
- EP-A- 0 596 227
- US-A- 3 909 587
- US-A- 4 058 701
- US-A- 4 731 521

## Description

La présente invention concerne les allume-cigares, notamment pour véhicules automobiles, et se rapporte plus particulièrement au bouchon chauffant amovible que comporte un tel allume-cigares.

Ainsi qu'on le sait un allume-cigares comporte un corps d'allumage fixé sur une paroi fixe du véhicule telle qu'une console ou le tableau de bord de celui-ci.

Ce corps, d'une part, porte des pièces d'alimentation électriques ainsi qu'un organe de prise de courant, usuellement sous la forme d'un bilame, et, d'autre part, sert de réceptacle au bouchon chauffant amovible comportant deux parties mobiles axialement l'une par rapport à l'autre à l'encontre de moyens élastiques de rappel à action axiale comme décrit par exemple dans le document FR-A-2 701 438, correspondant au préambule de la revendication indépendante.

Plus précisément la partie mobile comporte un bouton en matière électriquement et thermiquement isolante solidaire d'un support électriquement conducteur portant à isolation électrique une coupelle d'extrémité recevant intérieurement une résistance électrique chauffante en forme de spirale.

Lorsque l'on enfonce le bouton la coupelle vient en prise avec les crochets du bilame de prise de courant et un circuit électrique est établi permettant le chauffage de la résistance chauffante.

Dès que ladite résistance atteint la température souhaitée les lames du bilame se dilatent et le bouton revient à sa position initiale sous l'action des moyens élastiques de rappel. Il ne reste plus alors qu'à extraire le bouchon pour allumer par exemple une cigarette.

Il importe donc d'obtenir une liaison mécanique et électrique sûre entre la spire extérieure du spiral de la résistance chauffante et la paroi interne de la coupelle qui reçoit la résistance chauffante.

Pour cette raison on a prévu dans le document FR-A-2 457 787 de rabattre le bord de la coupelle métallique sur la périphérie externe de la résistance chauffante avec interposition d'un anneau métallique.

Grâce à cette disposition on obtient un allume-cigares fiable et une fixation sans soudure de la résistance chauffante.

Néanmoins, notamment pour des raisons économiques, il est souhaitable de réduire le nombre de pièces du bouchon et donc de supprimer l'anneau métallique.

La présente invention a pour objet de répondre à ce souhait, tout en conservant une liaison mécanique et électrique sûre et sans soudure entre la coupelle et la résistance chauffante.

Suivant l'invention un bouchon chauffant du type susindiqué est caractérisé en ce que le fond de la coupelle présente, pour contact avec l'extrémité extérieure de la résistance chauffante, une pluralité de pattes d'appui dirigées vers l'intérieur de la coupelle, en ce que l'extrémité extérieure de la résistance chauffante est montée à serrage entre lesdites pattes et le bord de la coupelle rabattu vers l'intérieur, et en ce que lesdites pattes sont implantées au niveau de la zone arrondie de raccordement du fond au bord latéral de la coupelle.

Grâce à l'invention le montage de la résistance est réalisé de manière mécanique sans soudure et on réduit le nombre de pièces, aucun anneau n'étant nécessaire.

Cette disposition permet de ne pas modifier l'axe d'assemblage ni la rondelle électriquement isolante interposée entre les fonds de la coupelle et du support.

On économise également de la matière en ce qui concerne la rondelle interne électriquement isolante montée au contact du fond de la coupelle.

En effet on rogne la matière de ladite rondelle au niveau de chaque patte d'appui pour pouvoir monter ladite rondelle.

De plus la formation des pattes d'appui est aisée à réaliser par découpe et pliage ou cisaillage et pliage. Ces pattes font appel à un outillage simple.

En outre ces pattes permettent de rabattre aisément le bord de la coupelle.

D'une manière générale on ne modifie pas profondément la coupelle qui continue à avoir une hauteur réduite et une bonne résistance mécanique.

La description qui va suivre illustre l'invention en regard des dessins annexés dans lesquels :
- la figure 1 est une vue en coupe axiale partielle du bouchon montrant l'assemblage de la résistance avec sa coupelle associée selon l'invention ;
- la figure 2 est une vue en coupe axiale selon la ligne A-A de la figure 1.

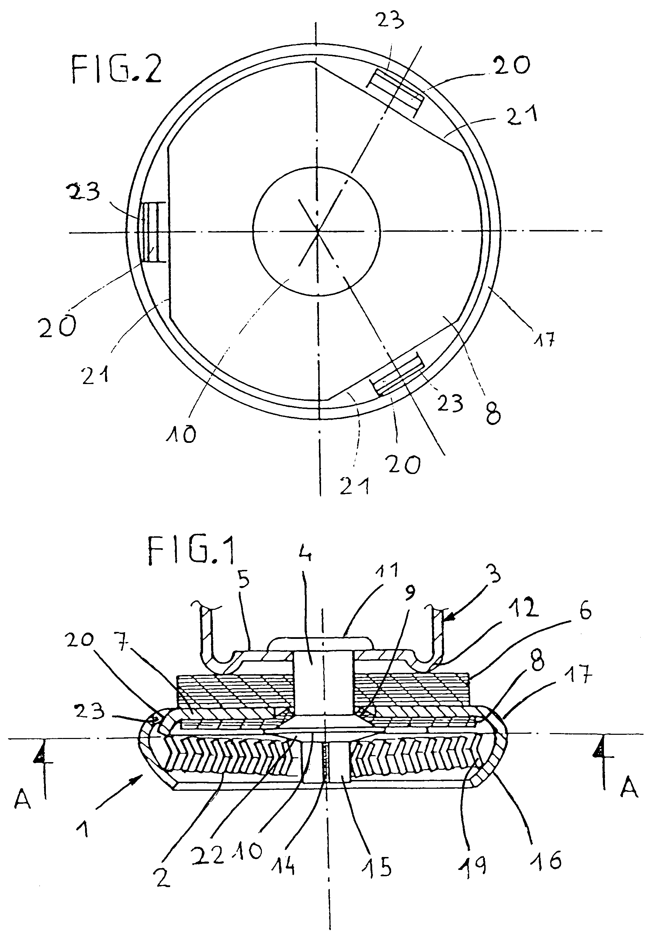

A la figure 1 on voit en 1 la coupelle d'extrémité électriquement conductrice, ici métallique, du bouchon chauffant de l'allume-cigares.

Cette coupelle 1 est trouée centralement et sert de réceptacle à la résistance chauffante 2 en forme de spirale. Elle est destinée à coopérer de manière précitée avec les lames du bilame du corps d'allumage pour chauffage de la résistance 2.

Cette coupelle 1, de forme annulaire creuse, est fixée au support 3 du bouchon amovible par l'intermédiaire d'un axe 4 électriquement conducteur.

Pour plus de précision sur la constitution du support 3, également électriquement conducteur, on se reportera aux documents FR-A-2 457 787 et 2 701 438 précités.

Ce support 3 est en forme de douille métallique et présente un fond 5 traversé par l'axe d'assemblage 4 servant à la fixation de la coupelle 1 au support 3 avec intervention d'une rondelle externe électriquement isolante 6 entre le fond 5 du support 3 et le fond 7 de la coupelle 1.

En variante la rondelle 6 peut être remplacée par un fusible destiné à couper le circuit électriquement d'alimentation de la résistance 2 électriquement conductrice lorsque la température excède une valeur prédéterminée.

Dans le fond 7 de la coupelle 1 est disposée une rondelle interne 8 électriquement isolante, dont le bord intérieur vient prendre appui sur un épaulement annulaire 9 incliné appartenant à un renflement 10 de l'axe 4. Cet axe 4 traverse centralement le support 3 (son fond 5), la rondelle 6, le fond 7 de la coupelle 1 et la rondelle 8. L'axe 4 est serti en 11 au contact du fond 5 du support 3 présentant un bourrelet annulaire périphérique 12 pour contact avec la rondelle isolante 6. Le fond 7 de la coupelle 1 est ainsi monté en sandwich entre les deux rondelles 6,8.

Ainsi qu'on l'aura compris et tel qu'il ressort des figures, le support 3 porte à isolation électrique la coupelle 1 et l'axe d'assemblage 4 sert de centreur à la rondelle 6. Grâce à l'épaulement 9, en contact avec le bord intérieur de la rondelle 8, on obtient un centrage automatique de la coupelle 1 par rapport à l'axe 4, et donc par rapport au support 3, lors du sertissage de l'axe 4 au contact de la face du fond 5 tournée à l'opposé de la rondelle 6 et de la coupelle 1.

Après ce sertissage, le bord intérieur de la rondelle 0 prend une forme tronconique et pénètre dans l'ouverture centrale de la coupelle 1.

La résistance chauffante 2 axialement souple, ici en forme de spirale, présente une extrémité intérieure 14 logée dans une fente diamétrale prévue à l'extrémité libre 15 de l'axe 4 afin d'assurer une fixation et une liaison électrique de la résistance 2 avec le support 3 par l'intermédiaire de l'axe 4.

La résistance 2 est logée dans la coupelle 1 en étant entourée par le bord annulaire 16 que présente latéralement la coupelle 1 à la périphérie externe de son fond 7. Le bord latéral 16 est initialement d'orientation axiale et se raccorde d'un seul tenant au fond 7 par une zone arrondie 17. La coupelle creuse 1 est donc délimitée par le fond 7 et le bord latéral 16.

Initialement la résistance 2 est logée dans la coupelle 1 en étant enfilée par son extrémité intérieure 14 (sa dernière spire) dans la fente d'extrémité de l'axe 4. Sa spire d'extrémité extérieure 19 est alors en contact avec le bord droit métallique 16 de la coupelle 1.

Ensuite on rabat vers l'intérieur (en direction du fond 7 de la coupelle) le bord 16 de la coupelle métallique 1 pour, de manière connue en soi, lui donner la forme extérieure nécessaire à sa coopération avec les crochets du bilame de prise de courant (non visible) de l'allume-cigares et pour que simultanément le spirale 2 (la résistance chauffante) se place de la manière représentée à la figure 1. Le bord 16 enveloppe donc la résistance 2.

Plus précisément selon l'invention le fond 7 de la coupelle 1 présente à sa périphérie externe, au niveau de son raccordement avec la zone arrondie 17 de raccordement au bord 16, des pattes d'appui 20 ici réparties de manière régulière.

Ces pattes 20 sont obtenues aisément par cisaillage et pliage du fond 7 métallique en direction opposée à la rondelle isolante 6, donc vers l'intérieur de la coupelle 1.

En variante les pattes 20 sont obtenues par découpe et pliage. Dans tous les cas une ouverture 23 est associée à chaque patte 20.

La hauteur des pattes 20 est supérieure à l'épaisseur de la rondelle 8. Ces pattes 20 sont destinées à venir en contact avec l'extrémité extérieure 19 de la résistance 2 et permettent un montage de la rondelle 8 à l'intérieur des pattes 20. Ces pattes 20 prolongent donc vers l'extérieur la rondelle 8, en sorte que la résistance 2 n'est pas admise à s'inscruter dans la rondelle interne 8, qui est ainsi ménagée.

Dans une première opération on effectue un sertissage de l'axe 4 avec fixation des rondelles 6,8; et de la coupelle 1 au support 3.

Après on monte la résistance 2 à l'intérieur de la coupelle 1 en enfilant l'extrémité intérieure 14 (ou première spire) de la résistance 2 sur l'extrémité libre 15 fendue de l'axe 4, puis on rabat le bord 16 vers l'intérieur en effectuant globalement un roulage.

Lors de cette opération la résistance 2 vient en contact avec les pattes d'appui 20, son extrémité extérieure 19 (sa dernière spire) étant déformée (pressée) en direction du fond 7.

La dernière spire externe de la résistance 2 est donc pressée automatiquement au contact des pattes d'appui 20.

Avantageusement pour ce faire les spires de la résistance 2 ont en section une forme de V. Ainsi la dernière spire 19 de la résistance 2 est montée à serrage entre lesdites pattes 20 et le bord 16 de la coupelle 1 rabattu vers l'intérieur.

On appréciera que la résistance 2, après roulage du bord 16, vient en contact local avec le renflement 10 et plus particulièrement avec l'épaulement incliné supérieur 22 que présente le renflement 10 du côté opposé à son épaulement 9, ledit renflement 10 ayant globalement une section en forme de V. L'épaulement 22 est dénommé supérieur car il s'étend en surélévation par rapport à la rondelle 8 en étant tourné en direction opposée au fond 7, tandis que l'épaulement 9, dit inférieur, est tourné vers le fond 7.

On obtient ainsi de très bonnes liaisons mécaniques et électriques entre, d'une part, l'axe 4 et l'extrémité interne de la résistance 2, et, d'autre part, entre le bord 16, les pattes 20 et l'extrémité extérieure de la résistance 2 montée ainsi sous précontrainte en étant enveloppée par le bord 16.

On appréciera que le pliage vers l'intérieur des pattes 20 permet de ne pas déstandardiser la rondelle 6 et que la rondelle 8 est de surface réduite par rapport à celle du document FR-A-2 457 787. On économise ainsi de la matière tout en ne modifiant pas, de manière profonde, la coupelle 1.

Plus précisément on rogne la matière de la rondelle 8 au niveau des pattes d'appui 20.

Ainsi la rondelle interne 8 présente un méplat 21 de dégagement en vis-à-vis de chaque patte 20 (figure 2). Ici trois méplats 21 et trois pattes 20 sont prévus. Bien entendu cela dépend des applications, le nombre de pattes 20 et de méplats 21 pouvant varier.

En outre l'axe 4 demeure inchangé.

De plus on réduit le nombre de pièces, tout en cintrant la résistance 2 et en ménageant celle-ci. Ici un jeu existe entre la résistance 2 et la rondelle 8 du fait que les pattes 20 ont une hauteur supérieure à l'épaisseur de la rondelle 8. Ces pattes 20 sont inclinées en direction du bord 16 et affectent la zone arrondie de raccordement 17 du bord latéral 16 avec le fond 7.

On appréciera que la section en V de la résistance 2 permet de ne pas abîmer les spires de la résistance 2 notamment lorsque l'on rabat le fond 16.

On appréciera que l'on peut réduire l'épaisseur de la rondelle 8 car l'extrémité extérieure 19 de la résistance 2 ne s'incruste pas dans la rondelle 8.

On notera également que la section en forme de V de la résistance 2 permet d'obtenir de manière sûre un contact entre la dernière spire 19 de la résistance et les pattes d'appui inclinées 20. Ici les arêtes de la dernière spire 19 sont en contact respectivement avec le bord rabattu 16 et l'arête externe des pattes 20 (figure 1).

Ces pattes 20 diminuent faiblement la résistance de la coupelle d'extrémité 1.

La rondelle 8 a une bonne résistance. En outre une bonne ventilation de la résistance est obtenue grâce aux pattes 20 laissant apparaître pour chacune de celle-ci une ouverture 23 dans la zone 17.

De l'air peut s'écouler des ouvertures 23 à l'extrémité ouverte de la coupelle 1 et également peut refroidir la face interne, tournée vers la rondelle 8, de la résistance 2 montée de manière suspendue à l'intérieur de la coupelle grâce à l'épaulement 22, au bord rabattu 16 et aux pattes 20.

Bien entendu la rondelle 8 au lieu de méplats 21 peut présenter d'autres formes de dégagement par exemple des encoches.

## Revendications

1. Bouchon chauffant pour allume-cigares, notamment pour véhicule automobile, comportant une coupelle d'extrémité (1) portée à isolation électrique par un support (3) par l'intermédiaire d'un axe (4) à extrémité libre fendue pour montage de l'extrémité interne d'une résistance chauffante (2) en forme de spirale logée à l'intérieur de la coupelle (1), ladite coupelle (1) étant délimitée par un bord annulaire latéral (16) se raccordant par une zone arrondie (17) à un fond (7) traversé par l'axe d'assemblage (4), caractérisé en ce que le fond (7) de la coupelle (1) présente, pour contact avec l'extrémité extérieure (19) de la résistance chauffante (2), une pluralité de pattes d'appui (20) dirigées vers l'intérieur de la coupelle (1), en ce que l'extrémité extérieure (19) de la résistance chauffante est montée à serrage entre lesdites pattes (20) et le bord latéral (16) de la coupelle (1) rabattu vers l'intérieur et en ce que lesdits pattes (20) sont implantées au niveau de la zone arrondie (17) de raccordement du fond (7) au bord latéral (16) de la coupelle (1).

2. Bouchon selon la revendication 1, caractérisé en ce que les pattes (20) sont inclinées en direction du bord (16).

3. Bouchon selon la revendication 1, dans lequel une rondelle interne électriquement isolante (8) est interposée entre le fond (9) de la coupelle (1) et un épaulement incliné (9) appartenant à un renflement (10) que présente l'axe d'assemblage (4), caractérisé en ce que la hauteur des pattes d'appui (20) est supérieure à la hauteur de ladite rondelle (8).

4. Bouchon selon la revendication 1, caractérisé en ce que ladite rondelle électriquement isolante (8) présente un dégagement (21) en vis-à-vis de chaque patte d'appui (20).

5. Bouchon selon la revendication 4, caractérisé en ce que les dégagements (21) sont formés par des méplats (21).

6. Bouchon selon la revendication 1, caractérisé en ce qu'une ouverture (23) est associée à chaque patte d'appui (20).

## Claims

1. A heating plug for a cigar lighter, especially for a motor vehicle, including an end cup element (1) carried by an electrically insulating support element (3) through an interposed bar element (4) having a split free end for mounting thereon the inner end of a heating resistor (2) of spiral form mounted inside the cup element (1), the said cup element (1) being bounded by an annular side edge (16) which is joined through a rounded zone (17) to a base portion (7) through which the assembly bar element (4) extends, characterised in that the base portion (7) of the cup element (1) has, for contact with the outer end (19) of the heating resistor (2), a plurality of engagement lugs (20) directed towards the interior of the cup element (1), in that the outer end (19) of the heating resistor is gripped between the said lugs (20) and the side edge (16) of the cup element (1), which is turned inwardly, and in that the said lugs (20) are located in the region of the rounded zone (17) joining the base portion (7) to the side edge (16) of the cup element (1).

2. A plug according to Claim 1, characterised in that the lugs (20) are inclined towards the edge (16).

3. A plug according to Claim 1, in which an electrically insulating internal ring (8) is interposed between the base portion (7) of the cup element (1) and an inclined shoulder (9) which is part of an enlarged portion (10) of the assembly bar element (4), characterised in that the height of the engagement lugs (20) is greater than the height of the said ring (8).

4. A plug according to Claim 1, characterised in that the said electrically insulating ring (8) has a cut-out (21) facing each engagement lug (20).

5. A plug according to Claim 4, characterised in that the cut-outs (21) are defined by flat portions (21).

6. A plug according to Claim 1, characterised in that an aperture (23) is associated with each engagement lug (20).

## Patentansprüche

1. Heizstopfen für Zigarettenanzünder, insbesondere für Kraftfahrzeuge, umfassend einen Abschlußteller (1), der elektrisch nichtleitend an einem Träger (3) über eine Achse (4) mit geschlitztem freiem Ende für die Anbringung des inneren Endes eines im Innern des Tellers (1) aufgenommenen spiralförmigen Heizwiderstands (2) gelagert ist, wobei der besagte Teller (1) durch einen ringförmigen Seitenrand (16) begrenzt ist, der sich durch einen abgerundeten Bereich (17) an einen Boden (7) anschließt, durch den die Verbindungsachse (4) hindurchgeht, **dadurch gekennzeichnet,** daß der Boden (7) des Tellers (1) für den Kontakt mit dem äußeren Ende (19) des Heizwiderstands (2) eine Mehrzahl von zum Innern des Tellers (1) gerichteten Auflageansätzen (20) aufweist, daß das äußere Ende (19) des Heizwiderstands eingespannt zwischen den besagten Ansätzen (20) und dem nach innen umgebogenen Seitenrand (16) des Tellers (1) gelagert ist und daß die besagten Ansätze (20) in Höhe des abgerundeten Anschlußbereichs (17) für den Anschluß des Bodens (7) an den Seitenrand (16) des Tellers (1) angeordnet sind.

2. Heizstopfen nach Anspruch 1, **dadurch gekennzeichnet,** daß die Ansätze (20) in Richtung des Rands (16) geneigt sind.

3. Heizstopfen nach Anspruch 1, bei dem eine nichtleitende innere Scheibe (8) zwischen dem Boden (7) des Tellers (1) und einer geneigten Schulter (9) eingefügt ist, die zu einer Ausbauchung (10) gehört, die die Verbindungsachse (4) aufweist,**dadurch gekennzeichnet,** daß die Höhe der Ansätze (20) größer als die Höhe der besagten Scheibe (8) ist.

4. Heizstopfen nach Anspruch 1, **dadurch gekennzeichnet,** daß die besagte elektrisch nichtleitende Scheibe (8) einen Absatz (21) gegenüber jedem Auflageansatz (20) aufweist.

5. Heizstopfen nach Anspruch 4, **dadurch gekennzeichnet,** daß die Absätze (21) durch Abflachungen (21) gebildet werden.

6. Heizstopfen nach Anspruch 1, **dadurch gekennzeichnet,** daß jedem Auflageansatz (20) eine Öffnung (23) zugeordnet ist.
